# DEMANDE DE BREVET EUROPEEN

(11) **EP 4 834 765 A1**
(43) Date de publication de la demande: **04.11.2026**
(21) Numéro de dépôt: 26173900.7
(22) Date de dépôt: 22.04.2026
(51) Int. Cl.: B64D 27/40

(54) **DISPOSITIF POUR COUPLER UN SYSTÈME DE PROPULSION À UN MÂT REACTEUR D'UN AÉRONEF ET AÉRONEF CORRESPONDANT**

(30) Priorité: 29.04.2025 FR 2504550
(71) Demandeur: Airbus Operations S.A.S., 31060 Toulouse (FR)
(72) Inventeur: AMARGIER, Rémi, TOULOUSE (FR); FUKASAKU, Kotaro, TOULOUSE (FR); CZAPLA, Lionel, TOULOUSE (FR)
(74) Mandataire: Airbus-OPS SAS

(57) **Abrégé**

L'invention concerne un dispositif pour le couplage d'un système de propulsion (102) à un mât réacteur (106) d'un aéronef (10), ledit dispositif comportant une embase (20) comportant une base (200) destinée à être fixée audit système de propulsion et une première paroi (201) s'étendant sensiblement perpendiculairement à ladite base (200). Ladite première paroi de ladite embase coopérant avec manchon (50), une paire de brides (282a, 282b) et des moyens de fixation (22) audit mât réacteur. Une entretoise (30) déformable est enfilée sur le manchon entre une des brides et le mât réacteur et est configurée pour se déformer en cas de défaillance de sorte à absorber la charge excessive engendrée lors de cette défaillance.

Avec un tel dispositif, il est possible de fournir une solution plus sécurisée de fixation d'un système de propulsion en cas de défaillance.

## Description

### DOMAINE TECHNIQUE

La présente invention concerne un dispositif pour le couplage d'un système de propulsion à l'aile d'un aéronef. Plus précisément, l'invention concerne un dispositif pour coupler un système de propulsion sur le mât réacteur de l'aéronef, ainsi qu'un aéronef comportant un système de propulsion et au moins un tel dispositif pour coupler le système de propulsion au mât réacteur.

### ÉTAT DE LA TECHNIQUE ANTÉRIEURE

Habituellement, pour un aéronef, un ensemble de propulsion comporte par exemple un turboréacteur qui est fixé à une aile de l'aéronef à l'aide d'un mât réacteur. Le mât réacteur est généralement constitué d'une structure comportant une pluralité de tubes fixés à des nervures.

Le turboréacteur est fixé aux nervures du mât réacteur au moyen d'attaches moteur qui comportent classiquement, à l'avant, une pluralité d'attaches moteur avant, et à l'arrière, une pluralité d'attaches moteur arrière.

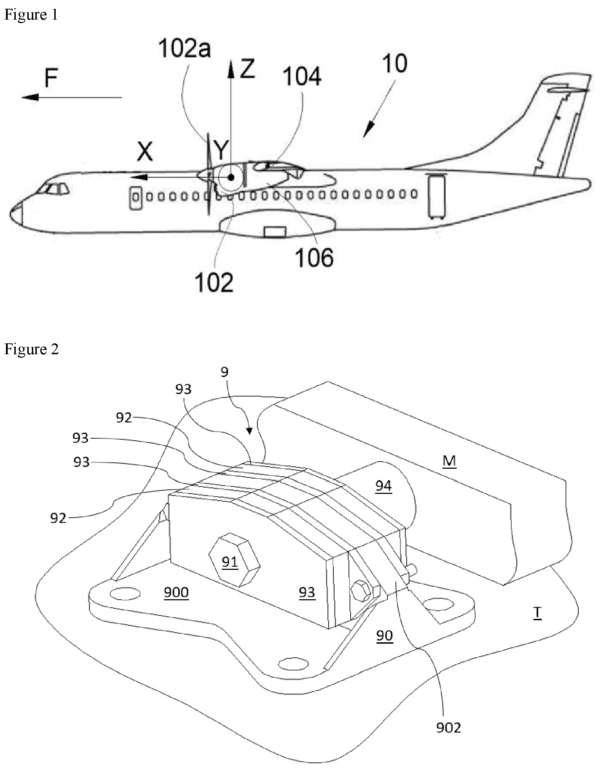

La Figure 2 illustre un exemple d'attache 9 de l'art antérieur pour coupler un turboréacteur T au mât réacteur M d'un aéronef. L'attache 9 comporte une embase 90 en forme de T inversé comportant une base 900 à partir de laquelle s'étend sensiblement perpendiculairement une paroi 902. La base 900 présente une forme globalement quadrilatérale et est destinée à être en contact avec le turboréacteur T et à être fixée au turboréacteur T par exemple à l'aide d'éléments de visserie.

La paroi 902 comporte un alésage dans lequel est logé un manchon (non visible) présentant lui-même un alésage dans lequel s'enfile une goupille de fixation 91 qui vient se fixer au mât réacteur M, par exemple par vissage. L'attache 9 comporte en outre des coussinets amortisseurs 92 mis en œuvre de part et d'autre de la paroi 902 de l'embase 90 et maintenus par un ensemble de brides 93 pour absorber en partie les forces générées par le turboréacteur. Une attache 9 mettant en œuvre des coussinets 92 est également appelée attache souple. Une entretoise 94 peut également être mise en œuvre, autour d'une partie du manchon, entre l'embase 9 et le mât réacteur M.

Bien que les installations actuelles donnent satisfaction en termes de fixation du turboréacteur au mât réacteur, la mise en œuvre de ces installations n'est pas optimale lorsqu'il s'agit de gérer un cas de défaillance, tel que l'arrachement des pales de l'hélice. En effet, une telle défaillance entraîne une charge élevée sur la structure, et en particulier sur le mât réacteur et sur l'aile de l'aéronef.

### EXPOSÉ DE L'INVENTION

Un objet de la présente invention est de proposer un dispositif pour le couplage d'un système de propulsion au mât réacteur solidaire d'une aile d'un aéronef, ce dispositif fournissant une solution plus sécurisée de fixation d'un système de propulsion en cas de défaillance.

À cet effet, est proposé un dispositif pour le couplage d'un système de propulsion sur un mât réacteur d'un aéronef, ledit dispositif comportant :
- une embase présentant une forme sensiblement en T inversé, ladite embase comportant une base destinée à être fixée audit système de propulsion et une première paroi s'étendant sensiblement perpendiculairement à ladite base, ladite première paroi comportant un premier alésage s'étendant selon un axe longitudinal ;
- un manchon sensiblement tubulaire comportant une première portion enfilée dans ledit alésage, ledit premier manchon comportant une deuxième portion dont une première extrémité s'étend dans le prolongement de ladite première portion en direction dudit mât réacteur et dont une deuxième extrémité est destinée à coopérer avec ledit mât réacteur, ledit manchon comportant un premier alésage central coaxial audit axe longitudinal ;
- des moyens de fixation comportant un écrou destiné à être solidaire dudit mât réacteur, une vis de fixation comportant une tête de fixation à partir de laquelle s'étend une tige filetée, ladite tige filetée étant enfilée dans ledit alésage central et étant vissée audit écrou ;
- une première bride avant et une première bride arrière, lesdites premières brides étant disposées respectivement de part et d'autre de ladite première paroi, ladite première bride avant comportant un deuxième alésage s'étendant coaxialement audit axe longitudinal, ladite première bride arrière comportant un troisième alésage s'étendant coaxialement audit axe longitudinal ;
- une première entretoise destinée à être disposée entre ladite première bride arrière et ledit mât réacteur, ladite première entretoise comportant un deuxième alésage central coaxial audit axe longitudinal de sorte que ladite première entretoise est enfilée sur ladite deuxième portion dudit manchon.

Ladite première portion dudit manchon est enfilée dans lesdits alésages desdites premières brides et où ladite tête de fixation vient en appui contre ladite première bride avant.

Selon l'invention, ladite première entretoise comporte au moins une portion fragilisée configurée pour permettre une déformation de ladite première entretoise lorsqu'une force supérieure à une force prédéterminée lui est appliquée.

De cette manière, si le système de propulsion ou bien l'attache présente une défaillance partielle ou totale, l'entretoise déformable permet d'absorber la charge élevée engendrée par la défaillance, notamment afin d'empêcher la transmission de cette charge élevée à la structure de l'aéronef (et en particulier à l'aile de l'aéronef). Il en résulte une meilleure protection de la structure de l'aéronef.

Selon un aspect particulier de l'invention, le dispositif comporte en outre une deuxième entretoise destinée à être disposée entre ladite première bride avant et ladite tête de fixation, ladite deuxième entretoise comportant un troisième alésage central coaxial audit axe longitudinal de sorte que ladite deuxième entretoise est enfilée sur ladite tige filetée de ladite vis de fixation et où ladite tête de fixation vient en appui contre ladite deuxième entretoise. En particulier, et de la même manière que la première entretoise, ladite deuxième entretoise comporte au moins une portion fragilisée configurée pour permettre une déformation de ladite deuxième entretoise lorsqu'une force supérieure à ladite force prédéterminée lui est appliquée. Selon un autre aspect particulier de l'invention, ladite force prédéterminée est supérieure de 2% par rapport à une force maximale pouvant s'appliquer à ladite première et/ou deuxième entretoise en fonctionnement normal.

Selon encore un autre aspect particulier de l'invention, chaque portion fragilisée se présente sous la forme d'une rainure qui s'étend globalement parallèlement audit axe longitudinal. Selon un autre aspect particulier de l'invention, chaque portion fragilisée se présente sous la forme d'une rainure qui s'étend globalement transversalement audit axe longitudinal.

Selon un aspect particulier de l'invention, chaque entretoise est fabriquée dans un matériau ductile.

Selon un aspect particulier de l'invention, ledit dispositif comporte également :
- une deuxième bride avant et une deuxième bride arrière, lesdites deuxièmes brides avant et arrière étant disposées respectivement de part et d'autre de ladite première paroi et en contact direct avec ladite première paroi, ladite deuxième bride avant comportant un quatrième alésage s'étendant coaxialement audit axe longitudinal, ladite deuxième bride arrière comportant un cinquième alésage s'étendant coaxialement audit axe longitudinal ; et
- un coussinet avant et un coussinet arrière qui sont disposés respectivement contre ladite deuxième bride avant et contre ladite deuxième bride arrière, ledit coussinet avant comportant un sixième alésage s'étendant coaxialement audit axe longitudinal, ledit coussinet arrière comportant un septième alésage s'étendant coaxialement audit axe longitudinal.

Ladite première portion dudit manchon est enfilée dans lesdits alésages desdites deuxièmes brides et dans lesdits sixième et septième alésages desdits coussinets. Ledit dispositif comporte en outre un ensemble de positionnement de ladite deuxième bride avant et de ladite deuxième bride arrière par rapport à ladite première paroi.

Selon un autre aspect particulier de l'invention, la deuxième bride avant comporte deux premières fentes de positionnement disposées à des extrémités opposées de ladite deuxième bride avant, ladite deuxième bride arrière comporte deux deuxièmes fentes de positionnement disposées à des extrémités opposées de ladite deuxième bride arrière et ladite première paroi comporte deux trous de positionnement disposés à des extrémités opposées de ladite première paroi. Lesdites premières fentes de positionnement, lesdites deuxièmes fentes de positionnement et lesdits trous de positionnement s'étendent respectivement coaxialement et globalement parallèlement audit axe longitudinal. Ledit ensemble de positionnement comporte également deux goupilles de positionnement qui sont enfilées respectivement dans une première fente de positionnement, dans une deuxième fente de positionnement et dans un trou de positionnement.

L'invention propose également un aéronef comportant un système de propulsion, un mât réacteur et au moins un dispositif tel que décrit précédemment, ledit système de propulsion étant couplé au mât réacteur par ledit au moins un dispositif, où ladite embase est fixée audit système de propulsion et où lesdits premier et deuxième écrous sont solidaires dudit mât réacteur.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation et de ses variantes, ladite description étant faite en relation avec les dessins joints, parmi lesquels :
La figure 1 est une vue de côté d'un aéronef selon l'invention ;
La figure 2 est une vue en perspective d'une attache selon une solution de l'art antérieur ;
La figure 3 est une vue en perspective d'un dispositif de couplage selon un exemple de réalisation de l'invention ;
La figure 4 est une vue de côté et en coupe du dispositif de la Figure 3 ;
La figure 5 est une vue de côté et en coupe du dispositif de la Figure 3 lors d'une défaillance ;
La figure 6 est une vue de côté et en coupe d'une variante du dispositif de la Figure 3 ;
La figure 7a est une vue de côté d'un premier exemple d'entretoise selon l'invention ;
La figure 7b est une vue de côté d'un deuxième exemple d'entretoise selon l'invention ;
La figure 7c est une vue de côté d'un troisième exemple d'entretoise selon l'invention ;
La figure 7d est une vue de côté d'un quatrième exemple d'entretoise selon l'invention ; et
La figure 7e est une vue de côté d'un cinquième exemple d'entretoise selon l'invention.

### EXPOSÉ DÉTAILLÉ D'UN EXEMPLE DE RÉALISATION

La Figure 1 montre un aéronef 10 qui comporte un système de propulsion 102, par exemple du type turboréacteur ou turbopropulseur. Le système de propulsion 102 est lié à une aile 104 de l'aéronef 10 par l'intermédiaire d'un mât réacteur 106.

Dans la description qui suit, les termes relatifs à une position sont pris en référence à un aéronef en position normale de vol, c'est-à-dire comme il est représenté sur la Figure 1 et les positions « avant » et « arrière » sont prises par rapport à l'avant et l'arrière du système de propulsion 102 et par rapport à la direction d'avancement F de l'aéronef 10 lorsque le système de propulsion 102 fonctionne.

Dans la description qui suit, et par convention, on appelle X la direction longitudinale du système de propulsion qui est horizontale lorsque l'aéronef est au sol, on appelle Y la direction transversale qui est horizontale lorsque l'aéronef est au sol, et Z la direction verticale qui est verticale lorsque l'aéronef est au sol, ces trois directions X, Y et Z étant orthogonales entre elles.

Le mât réacteur 106 et le système de propulsion 102 présentent un plan médian vertical XZ et le système de propulsion 102 est ici un turbopropulseur avec une hélice 102a, mais il pourrait être du type turboréacteur à double flux avec une nacelle.

Le principe de l'invention consiste à fournir un dispositif 2 de couplage d'un système de propulsion 102 au mât réacteur 106 d'un aéronef 10 mettant en œuvre un élément déformable capable d'absorber une charge élevée engendrée lors d'une défaillance partielle ou totale du dispositif 2 de couplage du système de propulsion, notamment afin d'empêcher la transmission de cette charge élevée à la structure de l'aéronef (et en particulier à l'aile de l'aéronef). En outre, si un dispositif 2 d'attache devient défectueux, les autres dispositifs 2 sont susceptibles de subir des charges supérieures à leurs charges normales. Leurs éléments déformables respectifs peuvent alors permettre d'absorber cet excédent de charge.

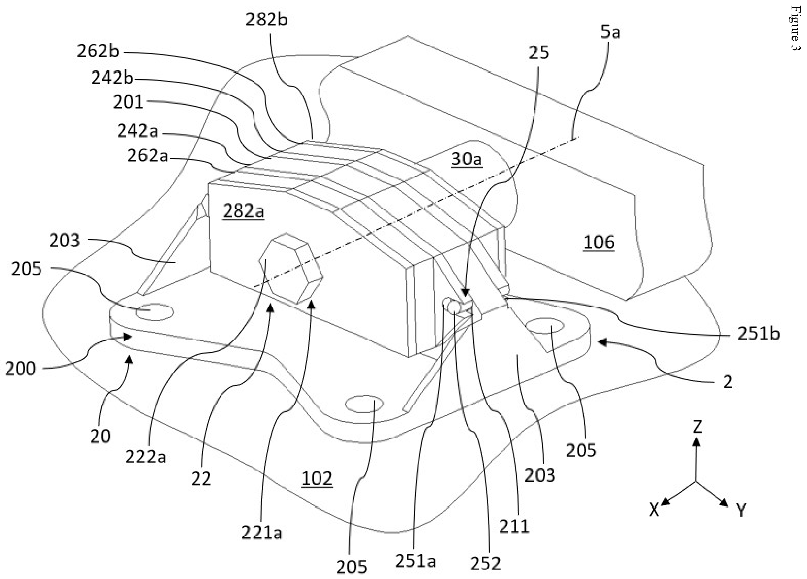

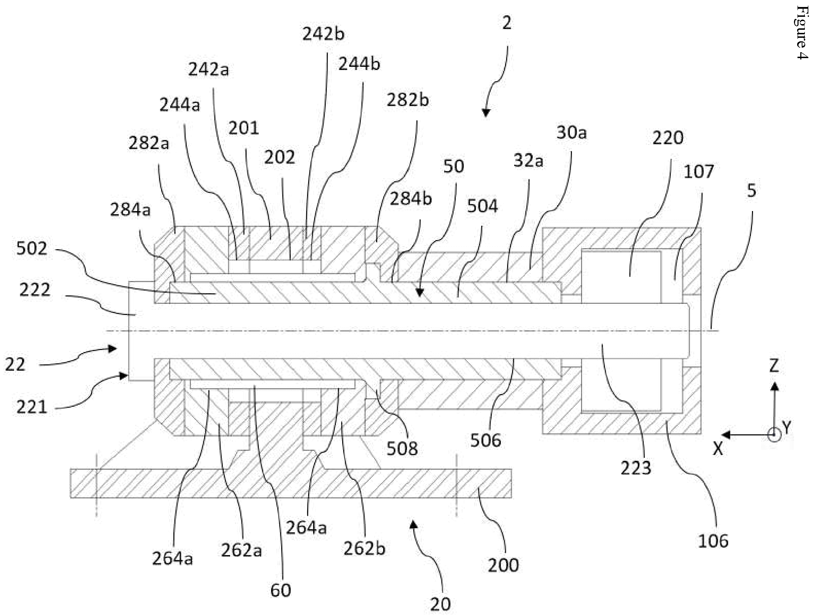

Les Figs. 3 et 4 montrent un dispositif 2 pour coupler un système de propulsion 102 au mât réacteur 106 de l'aéronef 10 selon un exemple de réalisation principal de l'invention. Le dispositif 2 est ici illustré à l'horizontal de sorte que les éléments puissent être décrits en relation avec le repère orthonormé X, Y et Z décrit ci-dessus. On comprend bien évidemment que le dispositif 2 peut être disposé et orienté différemment afin de s'adapter au système de propulsion 102 et au mât réacteur 106 auxquels le dispositif est fixé. La Figure 4 illustre une vue de côté et en coupe selon un plan de coupe (non illustré) qui s'étend parallèlement au plan vertical XZ et passant par l'axe de la vis de fixation décrite plus en détail dans la suite de cette description.

Dans cet exemple, le dispositif 2 comporte une embase 20 présentant une forme sensiblement en T inversé. Cette embase 20 comporte une base 200 sensiblement plane, qui dans cette illustration s'étend dans un plan parallèle au plan horizontal XY. La base 200 est destinée à être fixée au système de propulsion 102 par des moyens de fixation tels que des éléments de visserie.

Pour ce faire, la base 200 présente, dans cet exemple, des trous 205 ménagés au moins au niveau de chaque coin de la base 200. Les trous 205 sont chacun destinés à recevoir une vis de fixation pour permettre une fixation par vissage. D'autres techniques de fixation de l'embase au système de propulsion sont envisageables, telles que le rivetage ou le soudage notamment.

L'embase 20 comporte une première paroi 201 qui s'étend sensiblement perpendiculairement à la base 200, c'est-à-dire dans un plan parallèle au plan vertical YZ. La première paroi 201 comporte un premier alésage 202a qui s'étend selon un axe longitudinal 5. L'embase 20 peut également comporter, comme dans cet exemple, des parois latérales 203 de renfort s'étendant entre la base 200 et la première paroi 201, au niveau des bords latéraux de l'embase 20, de sorte à absorber les efforts mécaniques. Dans cet exemple, les parois latérales 203 présentent une forme triangulaire.

Le dispositif 2 comporte également un manchon 50 comportant une première portion 502 dont au moins une partie est reçue dans le premier alésage 202 de l'embase 20. Le manchon 50 comporte une deuxième portion 504 dont une première extrémité s'étend à partir et dans le prolongement de la première portion 502 en direction du mât réacteur 106. Comme illustré sur la Figure 4, l'extrémité libre de la deuxième portion 504 est destinée à coopérer avec le mât réacteur 106. Plus précisément, l'extrémité libre de la deuxième portion 504 est emmanchée dans un logement 107 ménagé dans le mât réacteur 106.

Dans cet exemple, les première 502 et deuxième 504 portions sont séparées par un épaulement 508 permettant d'optimiser le positionnement du manchon 50.

Le manchon 50 comporte en outre un premier alésage central 506 s'étendant coaxialement à l'axe longitudinal 5. Le premier alésage central 506 est destiné à recevoir une vis de fixation 221 décrite ci-dessous.

Le dispositif 2 comporte des moyens de fixation 22 qui permettent de fixer le dispositif 2 au mât réacteur 106. Pour ce faire, les moyens de fixation 22 comportent un écrou 220 solidaire du mât réacteur 106 et une vis de fixation 221. Dans cet exemple, l'écrou 220 solidaire du mât réacteur 106 est du type prisonnier, mais tout autre type d'écrou pouvant être solidarisé au mât réacteur 106 peut être mis en œuvre. Un jeu de montage est de préférence prévu entre l'extrémité libre de la deuxième portion 504 du manchon 50 et l'écrou 220, de sorte à permettre la déformation des coussinets décrits par la suite lors du serrage de la vis de fixation 221 et de sorte à permettre une compression de l'entretoise 30 (décrite ci-après) entre la première bride arrière 282b et le mât réacteur 106.

La première vis de fixation 221 comporte une tête de fixation 222 disposée à l'opposé du mât réacteur 106 qui vient en appui contre une première bride avant 282a (décrite ci-dessous). La première vis de fixation 221 comporte une tige filetée 223 qui s'étend à partir de la tête de fixation 222 selon l'axe longitudinal 5.

La tige filetée 223 est enfilée dans le premier alésage central 506 du premier manchon 50 et présente une longueur supérieure à la longueur du manchon 50 de sorte à pouvoir être vissée dans l'écrou 220 solidaire du mât réacteur 106. Le manchon 50 permet ainsi de transférer les efforts de cisaillement engendrés par le système de propulsion 102 vers le mât réacteur 106, notamment via les moyens de fixation 22.

Le dispositif 2 comporte en outre une paire de premières brides comportant une première bride avant 282a et une première bride arrière 282b. Les premières brides avant 282a et arrière 282b sont disposées respectivement de part et d'autre de la première paroi 201 de l'embase 20.

La première bride avant 282a comporte un deuxième alésage 284a qui s'étend coaxialement à l'axe longitudinal. La première bride arrière 282b comporte un troisième alésage 284b qui s'étend également coaxialement à l'axe longitudinal 5. Les dimensions des alésages 284a, 284b sont configurées pour permettre la réception de la première 502 portion du manchon 50. Dans cet exemple, il n'est pas prévu de jeu de montage radial entre les alésages 284a, 284b et la première portion 502 du manchon 50 afin de permettre un déplacement radial conjoint entre le manchon 50 et les premières brides avant 282a et arrière 282b. Le manchon 50 permet d'entraîner les premières brides avant 282a et arrière 282b, qui entraînent à leur tour la déformation des coussinets 262a, 262b.

Le dispositif 2 comporte également une entretoise 30 destinée à être disposée entre la première bride arrière 282b et le mât réacteur 106, et à être en appui contre la première bride arrière 282b et le mât réacteur 106 lorsque le dispositif 2 est assemblé. Lorsque la vis de fixation 221 est serrée, l'entretoise 30 est donc compressée entre la première bride arrière 282b et le mât réacteur 106.

L'entretoise 30 comporte un deuxième alésage central 32 s'étendant coaxialement à l'axe longitudinal 5. Les dimensions du deuxième alésage central 32 sont configurées pour permettre la réception de la deuxième portion 504 du manchon 50. Plus précisément, l'entretoise 30 est enfilée sur la deuxième portion 504a du manchon 50 et s'étend donc autour de la deuxième portion 504 dudit manchon 50.

La première portion 502 du manchon 50 est donc enfilée dans les deuxième 284a et troisième 284b alésages des premières brides 282a, 282b et la tête de fixation 222 de la vis de fixation 221 vient en appui contre la première bride avant 282a. La tige filetée 223 de la vis de fixation 221 est enfilée à travers le premier alésage central 506 du manchon 50 pour être vissée à l'écrou 220 solidaire du mât réacteur 106.

Selon l'invention, l'entretoise 30 est déformable. Cela permet d'absorber les charges très élevées qui peuvent être engendrées en cas de défaillances du système de propulsion. En particulier, l'entretoise 30 peut se déformer et par exemple s'écraser, voire se rompre, en cas de charges trop élevées de sorte à protéger la structure de l'aéronef. Cet écrasement de l'entretoise 30 permet que les éventuelles charges engendrées lors d'une défaillance ne soient pas transmises à la structure de l'aéronef 10, et notamment à l'aile 14 de l'aéronef 10. Par exemple, l'arrachement des pales de l'hélice du système de propulsion 102 peut engendrer des charges très importantes.

De préférence, l'entretoise 30 est configurée pour se déformer lorsqu'une force ou une charge prédéterminée lui est appliquée. Cette force prédéterminée est par exemple supérieure à 2% ou encore supérieure à 5% de la charge maximale qui lui est appliquée en fonctionnement normal.

Ainsi, l'entretoise 30 ne se déforme que si la charge qui lui est appliquée est suffisante, cela afin d'éviter tout écrasement ou rupture non souhaité. En effet, l'entretoise 30 est en permanence soumise à des charges dues au fonctionnement du système de propulsion 102. Sa déformation ne doit donc intervenir que lorsqu'une défaillance du dispositif 2 se produit.

De plus, l'entretoise 30 est configurée pour se déformer avant toute défaillance/détérioration des autres éléments du dispositif 2 de sorte à protéger ces derniers.

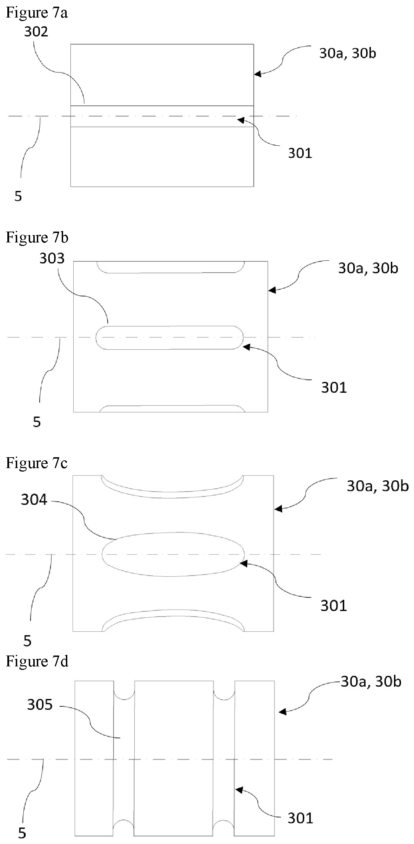

Pour ce faire, l'entretoise 30 présente une portion fragilisée 301 (illustrée sur les Figs. 7a à 7e) configurée pour permettre la déformation de l'entretoise lorsqu'une force supérieure à ladite force prédéterminée est atteinte.

Dans les exemples représentés, l'entretoise 30a, 30b présente une forme sensiblement tubulaire. On pourrait toutefois envisager que l'entretoise 30a, 30b présente une forme conique ou toute autre forme permettant de faciliter sa déformation.

Par exemple, la portion fragilisée se présente sous la forme d'une rainure 302, 303, 304 (traversante ou non) qui s'étend globalement parallèlement à l'axe longitudinal 5 (comme illustré sur les Figs. 7a à 7c).

En particulier, la Figure 7a illustre une entretoise 30a, 30b qui comporte une rainure 302 de forme rectiligne qui s'étend sur toute la longueur de l'entretoise 30a, 30b. Cette rainure 302 s'étend globalement parallèlement à l'axe longitudinal 5. Dans cet exemple, la rainure 302 s'étend sur toute la longueur de l'entretoise 30a, 30b et n'est donc pas traversante. On pourrait aussi envisager que la rainure 302 ne s'étende pas sur toute la longueur de l'entretoise 30a, 30b. Dans ce cas, la rainure 302 pourrait alors être non traversante ou bien traversante (c'est-à-dire qu'elle s'étendrait sur toute l'épaisseur de l'entretoise 30a, 30b).

La Figure 7b illustre une entretoise 30a, 30b qui comporte une rainure 303 de forme globalement oblongue et qui s'étend globalement parallèlement à l'axe longitudinal 5. Dans cet exemple, la rainure 303 est traversante. On comprend toutefois qu'elle pourrait également être non traversante.

La Figure 7c illustre une entretoise 30a, 30b qui comporte une rainure 304 de forme globalement ovale et qui s'étend globalement parallèlement à l'axe longitudinal 5. Dans cet exemple, la rainure 304 est traversante. On comprend toutefois qu'elle pourrait également être non traversante.

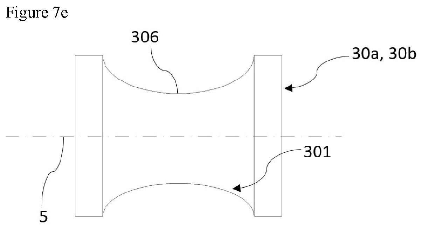

Dans une variante, la portion fragilisée 301 se présente sous la forme d'une rainure 305, 306 (traversante ou non) qui s'étend globalement transversalement à l'axe longitudinal 5 (comme illustré sur les Figs. 7d et 7e).

En particulier, la Figure 7d illustre une entretoise 30a, 30b qui comporte deux rainures 305 qui s'étendent parallèlement entre elles et transversalement à l'axe longitudinal 5. Ces rainures 305 s'étendent en outre ici sur toute la périphérie de l'entretoise 30a, 30b. Les rainures 305 sont globalement rectilignes et présentent une section globalement circulaire.

La Figure 7e illustre une entretoise 30a, 30b qui comporte une unique rainure 306 qui s'étend globalement transversalement à l'axe longitudinal 5. La rainure 306 est globalement centrée par rapport à la longueur de l'entretoise 30a, 30b et présente une section courbée vers le centre de l'entretoise 30a, 30b.

Ces formes particulières des rainures 302 - 306 permettent d'assurer une déformation optimale de l'entretoise 30a, 30b à la charge souhaitée. On comprend toutefois que d'autres formes de rainures (non illustrées ici) peuvent être envisagées sans s'écarter du principe général de l'invention.

De plus, et afin d'obtenir la déformation à la charge souhaitée, le matériau de fabrication de l'entretoise 30 et les dimensions (en particulier l'épaisseur) peuvent être sélectionnés avec pertinence. De préférence, le matériau est ductile afin de ne pas rompre dès que la force prédéterminée est atteinte. L'entretoise peut donc d'abord se déformer. Elle peut être faite par exemple d'aluminium, de titane ou encore d'acier.

Le dispositif 2 comporte en outre une paire de deuxièmes brides comportant une deuxième bride avant 242a et une deuxième bride arrière 242b. Les deuxièmes brides avant 242a et arrière 242b sont disposées respectivement de part et d'autre de la première paroi 201 de l'embase 20 et en contact direct avec la première paroi 201.

La deuxième bride avant 242a comporte un quatrième alésage 244a qui s'étend coaxialement à l'axe longitudinal 5. La deuxième bride arrière 242b comporte un cinquième alésage 244b qui s'étend coaxialement à l'axe longitudinal 5.

Les dimensions de ces alésages 244a, 244b sont configurées pour permettre la réception de la première portion 502 du manchon 50. Dans cet exemple, il est prévu un jeu de montage radial entre les alésages 244a, 244b et la première portion 502 du manchon 50 pour permettre une déformation des coussinets (décrits ci-dessous) jusqu'à un niveau de charge prédéterminé. Aussi, le dispositif 2 comporte au moins une paire de coussinets qui permet une déformation prédéterminée du dispositif 2 afin d'absorber au moins en partie les efforts engendrés par le système de propulsion 102. La mise en œuvre de ces coussinets permet d'obtenir une « attache souple ».

Dans cet exemple, le dispositif 2 comporte deux coussinets, à savoir un coussinet avant 262a et un coussinet arrière 262b. Les coussinets avant 262a et arrière 262b sont disposés respectivement en appui contre la deuxième bride avant 242a et la deuxième bride arrière 242b.

Le coussinet avant 262a comporte un sixième alésage 264a qui s'étend coaxialement à l'axe longitudinal 5. Le coussinet arrière 262b comporte un septième alésage 264b qui s'étend coaxialement à l'axe longitudinal 5.

Les dimensions de ces alésages 264a, 264b sont configurées pour permettre la réception de la première portion 502 du manchon 50. Dans cet exemple, il est prévu un jeu de montage radial entre les alésages 264a, 264b et la première portion 502 du manchon 50 pour permettre une déformation des coussinets jusqu'à un niveau de charge prédéterminé. Dans cet exemple, les coussinets 262a, 262b sont fabriqués en élastomère dont l'élasticité peut être sélectionnée en fonction de la déformation maximale souhaitée, par exemple.

Plus précisément, les premières brides avant 282a et arrière 282b viennent respectivement en appui contre les coussinets avant 262a et arrière 262b de sorte que le coussinet avant 262a soit enserré entre la deuxième bride avant 242a et la première bride avant 282a et que le coussinet arrière 262b soit enserré entre la deuxième bride arrière 242b et la première bride arrière 282b.

Ainsi, la mise en œuvre de l'entretoise 30 et des premières brides 282a, 282b permet, lors du vissage de la vis de fixation 221, de serrer les éléments du dispositif 2 entre eux.

Dans cet exemple, les premières brides avant 282a et arrière 282b comportent chacune, sur leur face se trouvant en vis-à-vis lorsque le dispositif 2 est assemblé, c'est-à-dire sur la face en contact avec un coussinet, des évidements. Plus précisément, la première bride avant 282a comporte un évidement permettant de recevoir l'extrémité libre de la première portion 502 du manchon 50. Dans cet exemple, il est prévu un jeu de montage entre l'évidement et la première portion 502 du manchon 50 pour permettre une déformation des coussinets 262a, 262b lors du vissage de la vis de fixation 221.

La première bride arrière 282b comporte aussi un évidement permettant de recevoir l'épaulement 508 séparant les première 502 et deuxième 504 portions du manchon 50.

Selon une variante de réalisation illustrée sur la Figure3, plutôt que de fixer les deuxièmes brides avant 242a et arrière 242b à la première paroi 201 de l'embase 20, le dispositif 2 peut mettre en œuvre un ensemble de positionnement 25 configuré pour positionner axialement les deuxièmes brides avant 242a et arrière 242b par rapport à la première paroi 201. Le maintien des deuxièmes brides 242a, 242b à la première paroi 201 est ici garanti par le serrage de la vis de fixation 221 qui permet de compresser les deuxièmes brides 242a et 242b contre la première paroi 201 de l'embase 20.

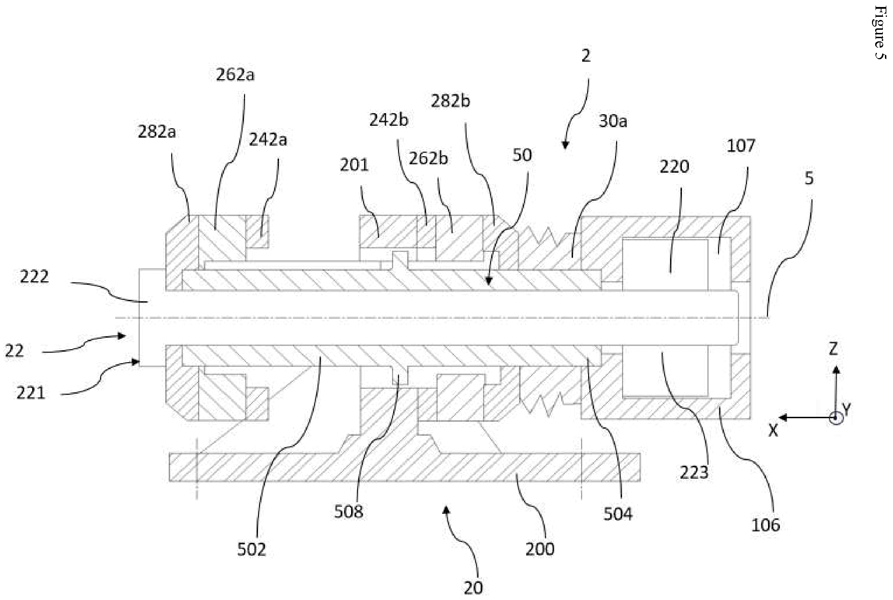

De cette manière, en cas d'écrasement (comme illustré sur la Figure 5) de l'entretoise 30, l'embase 20 peut se déplacer parallèlement à l'axe longitudinal 5. Dans cet exemple, l'embase 20 se déplace vers l'arrière lorsque l'entretoise 30 s'écrase. Ainsi, la première bride avant 282a, le coussinet avant 262a et la deuxième bride avant 242a se désolidarisent du reste du dispositif 2 (comme illustré sur la Figure 5) de sorte à absorber la charge élevée engendrée lors de la défaillance et à protéger la structure de l'aéronef 10.

Dans cet exemple particulier, la deuxième bride avant 242a comporte deux premières fentes de positionnement 251a disposées à des extrémités opposées de la deuxième bride avant 242a (ici au niveau des bords opposés situés respectivement à tribord et à bâbord de l'axe longitudinal 5). La deuxième bride arrière 242b comporte, de la même manière, deux deuxièmes fentes de positionnement 251b disposées à des extrémités opposées de la deuxième bride arrière 242a (ici au niveau des bords opposés situés respectivement à tribord et à bâbord de l'axe longitudinal 5). La première paroi 201 comporte quant à elle deux trous de positionnement 211 disposés à des extrémités opposées de la première paroi 201 (ici au niveau des bords opposés situés respectivement à tribord et à bâbord de l'axe longitudinal 5). Les premières fentes de positionnement 251a, les deuxièmes fentes de positionnement 251b et les trous de positionnement 211 s'étendent respectivement coaxialement et globalement parallèlement à l'axe longitudinal 5. En d'autres termes, les fentes de positionnement 251a, 251b et les trous de positionnement sont situés en vis-à-vis.

De plus l'ensemble de positionnement 25 comporte dans cet exemple deux goupilles de positionnement 252 qui sont chacune enfilées respectivement dans une première fente de positionnement 251a, dans une deuxième fente de positionnement 251b et dans un trou de positionnement 211.

De cette manière, les deuxièmes brides avant 242a et arrière 242b sont positionnées de manière optimale par rapport à la première paroi 201 lors du fonctionnement normal du dispositif 2. En cas de défaillance, un déplacement parallèle à l'axe longitudinal 5 d'une des brides avant 242a, 242b est permis de sorte à absorber la charge excessive restante suite à l'écrasement ou la rupture de l'entretoise 30 et améliorer encore la protection de la structure de l'aéronef 10.

On comprend toutefois que d'autres moyens de positionnement 25, non décrits ici, peuvent être envisagés sans s'écarter du principe de l'invention.

Comme illustré, le dispositif 2 peut mettre en œuvre, de manière optionnelle, un cylindre 60 de protection qui est emmanché sur au moins une partie de la première partie 502 du manchon 50. Le cylindre 60 permet de protéger le manchon 50 des éventuels contacts et frottements de ce dernier avec l'embase 20 lors de la déformation des coussinets 262a, 262b.

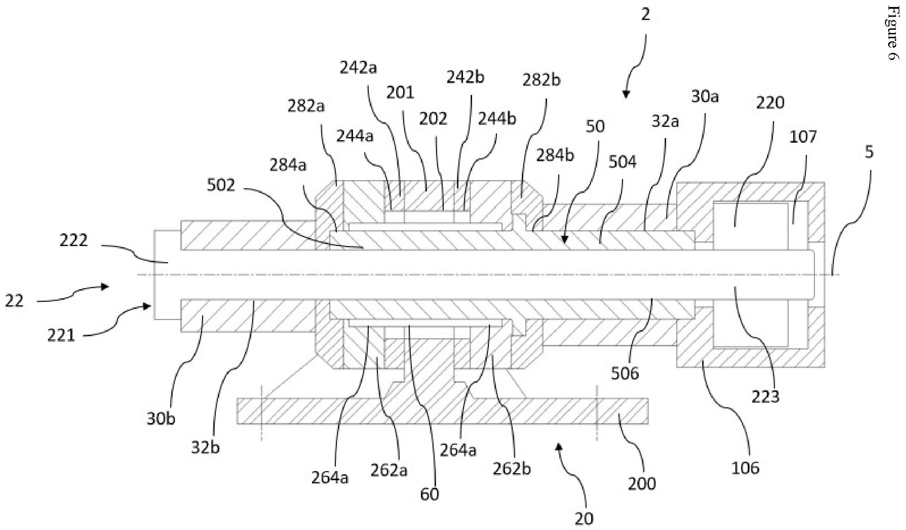

Selon une variante de réalisation, et comme illustré sur la Figure 6, le dispositif 2 selon l'invention peut comporter une deuxième entretoise 30b destinée à être disposée entre la première bride avant 282a et la tête de fixation 222a. En d'autres termes, le dispositif 2 comporte une entretoise 30a et une entretoise 30b de part et d'autre de la première paroi 201. Dans cette variante, les éléments constituant le dispositif 2 sont identiques et ne sont donc pas décrits de nouveau. En particulier, la deuxième entretoise 30b peut comporter une structure et des caractéristiques identiques à la première entretoise 30a décrite ci-dessus.

La deuxième entretoise 30b comporte un troisième alésage central 32b qui s'étend coaxialement à l'axe longitudinal 5 de sorte que la deuxième entretoise 30b puisse être enfilée sur la tige filetée 223 de la vis de fixation 221. Comme illustré, la tête de fixation 222 vient maintenant en appui contre la deuxième entretoise 30b plutôt que contre la première bride avant 282a. Le serrage de la vis de fixation 221 permet donc de compresser la deuxième entretoise 30b entre la tête de fixation 222 et la première bride avant 282a lors de l'assemblage du dispositif 2.

La mise en œuvre de cette deuxième entretoise 30b permet donc d'absorber une charge encore plus élevée en cas de défaillance. De plus, en fonction de la direction de la charge appliquée au dispositif 2, cette deuxième entretoise 30b permet à l'embase 20 de se déplacer également vers l'arrière (non illustré) en cas de défaillance. La protection de la structure de l'aéronef 10 est donc encore améliorée.

## Revendications

1. Dispositif (2) pour le couplage d'un système de propulsion (102) sur un mât réacteur (106) d'un aéronef (10), ledit dispositif (2) comportant :
- une embase (20) présentant une forme sensiblement en T inversé, ladite embase comportant une base (200) destinée à être fixée audit système de propulsion (102) et une première paroi (201) s'étendant sensiblement perpendiculairement à ladite base (200), ladite première paroi (201) comportant un premier alésage (202) s'étendant selon un axe longitudinal (5) *;*
- un manchon (50) sensiblement tubulaire comportant une première portion (502) enfilée dans ledit alésage (202), ledit premier manchon (50) comportant une deuxième portion (504) dont une première extrémité s'étend dans le prolongement de ladite première portion (502) en direction dudit mât réacteur (106) et dont une deuxième extrémité est destinée à coopérer avec ledit mât réacteur (106), ledit manchon (50) comportant un premier alésage central (506) coaxial audit axe longitudinal (5) *;*
- des moyens de fixation (22) comportant un écrou (220) destiné à être solidaire dudit mât réacteur (106), une vis de fixation (221) comportant une tête de fixation (222) à partir de laquelle s'étend une tige filetée (223), ladite tige filetée (223) étant enfilée dans ledit alésage central (506) et étant vissée audit écrou (220) ;
- une première bride avant (282a) et une première bride arrière (282b), lesdites premières brides (282a, 282b) étant disposées respectivement de part et d'autre de ladite première paroi (201), ladite première bride avant (282a) comportant un deuxième alésage (284a) s'étendant coaxialement audit axe longitudinal (5), ladite première bride arrière (282b) comportant un troisième alésage (284b) s'étendant coaxialement audit axe longitudinal (5) ;
- une première entretoise (30a) destinée à être disposée entre ladite première bride arrière (282b) et ledit mât réacteur (106), ladite première entretoise (30a) comportant un deuxième alésage central (32a) coaxial audit axe longitudinal (5) de sorte que ladite première entretoise (30a) est enfilée sur ladite deuxième portion (504) dudit manchon *(50) ;*
où ladite première portion (502) dudit manchon (50) est enfilée dans lesdits alésages (284a, 284b) desdites premières brides (282a, 282b) et où ladite tête de fixation (222a) vient en appui contre ladite première bride avant (282a).
**caractérisé en ce que** ladite première entretoise (30a) comporte au moins une portion fragilisée (301) configurée pour permettre une déformation de ladite première entretoise (30a) lorsqu'une force supérieure à une force prédéterminée lui est appliquée.

2. Dispositif (2) selon la revendication 1, **caractérisé en ce qu'**il comporte en outre une deuxième entretoise (30b) destinée à être disposée entre ladite première bride avant (282a) et ladite tête de fixation (222a), ladite deuxième entretoise (30b) comportant un troisième alésage central (32b) coaxial audit axe longitudinal (5) de sorte que ladite deuxième entretoise (30b) est enfilée sur ladite tige filetée (223) de ladite vis de fixation (221) et que ladite tête de fixation (222a) vient en appui contre ladite deuxième entretoise (30b),
et **en ce que** ladite deuxième entretoise (30b) comporte au moins une portion fragilisée (301) configurée pour permettre une déformation de ladite deuxième entretoise (30b) lorsqu'une force supérieure à ladite force prédéterminée lui est appliquée.

3. Dispositif (2) selon la revendication 1 ou 2, **caractérisé en ce que** ladite force prédéterminée est supérieure de 2% par rapport à une force maximale pouvant s'appliquer à ladite première et/ou deuxième entretoise (30a, 30b) en fonctionnement normal.

4. Dispositif (2) selon l'une des revendications 1 à 3, **caractérisé en ce que** chaque portion fragilisée (301) se présente sous la forme d'une rainure (302, 303, 304) qui s'étend globalement parallèlement audit axe longitudinal (5).

5. Dispositif (2) selon l'une quelconque des revendications 1 à 3, **caractérisé en ce que** chaque portion fragilisée (301) se présente sous la forme d'une rainure (305, 306) qui s'étend globalement transversalement audit axe longitudinal (5).

6. Dispositif (2) selon l'une quelconque des revendications 1 à 5, **caractérisé en ce que** chaque entretoise (30a, 30b) est fabriquée dans un matériau ductile.

7. Dispositif (2) selon l'une quelconque des revendications 1 à 6, **caractérisé en ce que** ledit dispositif (2) comporte également :
- une deuxième bride avant (242a) et une deuxième bride arrière (242b), lesdites deuxièmes brides avant (242a) et arrière (242b) étant disposées respectivement de part et d'autre de ladite première paroi (201) et en contact direct avec ladite première paroi (201), ladite deuxième bride avant (242a) comportant un quatrième alésage (244a) s'étendant coaxialement audit axe longitudinal (5), ladite deuxième bride arrière (242b) comportant un cinquième alésage (244b) s'étendant coaxialement audit axe longitudinal (5) ; et
- un coussinet avant (262a) et un coussinet arrière (262b) qui sont disposés respectivement contre ladite deuxième bride avant (242a) et contre ladite deuxième bride arrière (242b), ledit coussinet avant (262a) comportant un sixième alésage (264a) s'étendant coaxialement audit axe longitudinal (5), ledit coussinet arrière (262b) comportant un septième alésage (264b) s'étendant coaxialement audit axe longitudinal (5) ;
où ladite première portion (502) dudit manchon (50) est enfilée dans lesdits alésages (244a, 244b) desdites deuxièmes brides (242a, 242b) et dans lesdits sixième (264a) et septième (264b) alésages desdits coussinets (262a, 262b),
et où ledit dispositif (2) comporte en outre un ensemble de positionnement (25) de ladite deuxième bride avant (242a) et de ladite deuxième bride arrière (242b) par rapport à ladite première paroi (201).

8. Dispositif (2) selon la revendication 7, **caractérisé en ce que** ladite deuxième bride avant (242a) comporte deux premières fentes de positionnement (251a) disposées à des extrémités opposées de ladite deuxième bride avant (242a) et **en ce que** ladite deuxième bride arrière (242b) comporte deux deuxièmes fentes de positionnement (251b) disposées à des extrémités opposées de ladite deuxième bride arrière (242a), et **en ce que** ladite première paroi (201) comporte deux trous de positionnement (211) disposés à des extrémités opposées de ladite première paroi (201) ;
où lesdites premières fentes de positionnement (251a), lesdites deuxièmes fentes de positionnement (251b) et lesdits trous de positionnement (211) s'étendent respectivement coaxialement et globalement parallèlement audit axe longitudinal (5) ;
et où ledit ensemble de positionnement (25) comporte deux goupilles de positionnement (252) qui sont enfilées respectivement dans une première fente de positionnement (251a), dans une deuxième fente de positionnement (251b) et dans un trou de positionnement (211).

9. Aéronef (10) comportant un système de propulsion (102), un mât réacteur (106) et au moins un dispositif (2) selon l'une quelconque des revendications 1 à 8, ledit système de propulsion (102) étant couplé au mât réacteur (106) par ledit au moins un dispositif (2), où ladite embase (20) est fixée audit système de propulsion (102) et où ledit écrou (220) est solidaire dudit mât réacteur (106).
